# FASCICULE DE BREVET EUROPEEN

(11) **EP 2 247 555 B1**
(45) Date de publication et mention de la délivrance du brevet: **30.05.2012**
(21) Numéro de dépôt: 08872904.1
(22) Date de dépôt: 24.12.2008
(51) Int. Cl.: C04B 35/48, C04B 35/495, C04B 38/00

(54) **MOUSSE CERAMIQUE, SON PROCEDE D'OBTENTION ET SON UTILISATION COMME ISOLANT THERMIQUE**
KERAMIKSCHAUM, HERSTELLSUNGSVERFAHREN DAFÜR UND VERWENDUNG DAVON ALS WÄRMEDÄMMSTOFF
CERAMIC FOAM, METHOD FOR OBTAINING SAME AND USE THEREOF AS THERMAL INSULATOR

(30) Priorité: 27.02.2008 FR 0851253
(43) Date de publication de la demande: 10.11.2010
(73) Titulaire: Université du Sud Toulon-Var, 83130 La Garde (FR)
(72) Inventeur: CRESPY, Alain, F-30560 Saint Hilaire de Brethmas (FR); SATRE, Pierre, F-83200 Toulon (FR); FAVOTTO, Claude, F-83160 La Valette du Var (FR); VINCENT, Adrien, F-13440 Cabannes (FR); CARRIERE, Pascal, F-83100 Toulon (FR); GONNET, Rémi, F-26780 Malataverne (FR)
(74) Mandataire: Novagraaf Technologies
(86) Numéro de dépôt international: PCT/FR2008/001826
(87) Numéro de publication internationale: WO 2009/106747

(56) Documents cités:
- DE-A1- 4 237 272
- FR-A- 2 857 961
- US-A- 4 845 056
- DATABASE WPI Section Ch, Week 199734 Thomson Scientific, London, GB; Class A97, AN 1997-364571 XP002499456 LIU T; MENG G; PENG D: "Sol-gel method for preparing yttrium oxide blended zirconium oxide ceramic micro filter film" -& CN 1 109 381 A ((UYCH-N) UNIV CHINA SCI & TECH) 4 octobre 1995 (1995-10-04)

## Description

La présente invention concerne, de façon générale, le domaine des mousses et celui de l'isolation thermique.

Il est connu d'utiliser des mousses, notamment des mousses céramiques, comme isolant thermique.

Par exemple, le document publié sous le numéro EP 1 115 574 décrit un procédé de fabrication d'une mousse céramique à partir d'un complexe AlCl₃ (iPr₂O).

Le document FR 2 857 961 A décrit un monolithe de mousse solide d'un matériau inorganique ayant une macroporosité formée de pores sphériques ou polyédriques qui ont un diamètre moyen entre 10 µm et 800 µm, une mésoporosité formée de pores ayant un diamètre moyen entre 20 et 40 A, et une microporosité formée de pores qui ont une dimension inférieure ou égale à 12 A, la largeur des bords de Plateau étant entre 10 et 100 µm, et la longueur des bords de Plateau étant entre 10 et 800 µm; caractérisé en ce que le matériau inorganique est un oxyde choisi parmi la silice, les alumines α, β ou γ, l'oxyde de titane, l'oxyde de zirconium, l'oxyde de thorium, l'oxyde de niobium, l'oxyde de tantale, l'oxyde de vanadium, l'oxyde de tungstène, l'oxyde de cérium, l'oxyde d'étain, l'oxyde de thallium et l'oxyde de bore; qui peut être utilisé notamment dans le domaine de l'isolation acoustique, de l'isolation thermique, du traitement des eaux, comme renfort de pneumatiques, comme agent texturant, comme support de catalyseur, ou comme tissu osseux de synthèse.

De manière plus générale, ce document concerne un procédé de fabrication de mousse céramique, dans lequel la mousse est obtenue à partir d'un précurseur qui contient au moins un élément formant une céramique et qui libère au moins un produit de réaction volatile pendant un processus de gélification inorganique. Le précurseur peut comprendre en particulier un composé de la forme MXₙ (R_{y}O_{z})₁ où M est choisi parmi Al, Ti, Zr, Si, V, Zn et/ou Fe, X est un halogène, et R_{y}O_{z} est une molécule donneuse d'oxygène.

Les mousses obtenues par le procédé décrit peuvent être utilisées comme isolant thermique.

Dans ce contexte, le but principal de la présente invention est de proposer une nouvelle mousse céramique présentant des propriétés thermiques améliorées par rapport aux mousses connues.

A cette fin, l'invention concerne, selon un premier de ses aspects, une mousse comprenant au moins 90% en poids, et de préférence au moins 95% en poids, d'un oxyde métallique choisi parmi l'oxyde d'hafnium ou l'oxyde de tantale.

L'invention propose ainsi une mousse céramique qui présente en particulier d'excellentes propriétés thermiques, meilleures que les mousses céramiques connues, et qui en font un très bon matériau pour l'isolation thermique.

La mousse selon l'invention peut être avantageusement constituée de 100% en poids d'oxyde d'hafnium ou d'oxyde de tantale.

La mousse peut autrement comprendre de l'oxyde d'yttrium comme complément à 100% en poids.

Selon une version avantageuse de l'invention, la mousse comprend au plus 10% en poids, voire au plus 5% en poids, d'oxyde d'yttrium.

De préférence, l'oxyde métallique est sous forme de grains de granulométrie comprise entre 300 micromètres et 2 millimètres.

Elle présente avantageusement des pores de taille comprise entre 10 et 500 micromètres.

De manière préférentielle, la mousse selon l'invention présente une surface spécifique BET comprise entre 13 et 15 mètres carré par gramme.

En outre, elle présente par exemple une masse volumique apparente comprise entre 300 et 1000 kilogrammes par mètre cube, et de préférence comprise entre 320 et 500 kilogrammes par mètre cube.

Selon un deuxième de ses aspects, l'invention concerne un procédé d'obtention d'une mousse, comprenant des étapes de :
(a) synthèse d'un précurseur de mousse incluant une dissolution de chlorure d'hafnium ou de chlorure de tantale dans un solvant chloré tel que le dichlorométhane, puis une addition d'un éther symétrique tel que l'éther diéthylique pour former le précurseur de mousse de formule HfCl_{x-y}(OCH₂CH₃)_{y} ou TaCl_{x-y}(OCH₂CH₃)_{y},
(b) précipitation du précurseur de mousse pour obtenir un précipité de formule Hf(CH₃CH₂O)₄ ou Ta (CH₃CH₂O)₅, de préférence à une température de l'ordre de 25°C,
(c) séchage sous vide du précipité, de préférence à une température de l'ordre de 25°C,
(d) moussage du précipité sec à une température supérieure à la température d'ébullition du solvant chloré, et de préférence à une température comprise entre 50 et 95°C, et indifféremment en volume ouvert ou fermé, pour obtenir une mousse organométallique, et
(e) traitement thermique de la mousse organométallique à une température au moins égale à 500°C, et de préférence à une température comprise entre 500°C et 1000°C.

La dissolution décrite dans l'étape (a) peut inclure en outre la dissolution de chlorure d'yttrium.

De préférence, le rapport molaire de chlorure d'hafnium ou de tantale sur le solvant chloré, et notamment sur le dichlorométhane, est au plus de l'ordre de un sur cinq (1/5).

Le rapport molaire de chlorure d'hafnium ou de tantale sur l'éther symétrique, et notamment sur l'éther diéthylique, est avantageusement de l'ordre de un sur quatre (1/4).

La synthèse du précurseur de mousse est faite préférentiellement sous argon ou sous air sec.

La synthèse du précurseur de mousse est faite par exemple à température ambiante, et de préférence à une température de l'ordre de 25°C.

En outre, cette synthèse est de préférence réalisée sous une faible surpression, afin d'éviter toute entrée d'air dans l'enceinte de réaction.

Le traitement thermique de la mousse organométallique peut être fait de manière avantageuse à une température de l'ordre de 600°C, et de préférence sous air. Une telle température offre un bon compromis entre les dépenses énergétiques nécessaires et la vitesse de réaction, qui est d'autant plus élevée que l'est la température de réaction.

Selon un troisième de ses aspects, l'invention concerne l'utilisation de la mousse selon l'invention comme isolant thermique.

La mousse de l'invention peut être utilisée sous différentes formes : prise en sandwich entre deux plaques supports, sous forme de billes pouvant servir au remplissage de tout volume, seule ou dans un liant, etc. Ainsi, au moment de son utilisation, elle peut être projetée, injectée, ou installée sous forme de plaques.

D'autres caractéristiques et avantages de l'invention ressortiront clairement de la description détaillée qui en est faite ci-après, à titre indicatif et nullement limitatif, en référence aux dessins annexés dans lesquels :
- les figures 1A, 1B, 1C et 1D représentent des micrographies obtenues au MEB, à la même échelle, pour des mousses d'oxyde d'hafnium selon l'invention ; la figure 1A correspond à une mousse de granulométrie supérieure à 2 mm ; la figure 1B à correspond à une mousse de granulométrie comprise entre 1 et 2 mm ; la figure 1C correspond à une mousse de granulométrie comprise entre 300 µm et 1 mm ; la figure 1D correspond à une mousse de granulométrie inférieure à 300 µm ;
- les figures 2, 3 et 4 représentent d'autres micrographies au MEB, à trois échelles différentes entre elles et avec celle des figures 1A, 1B, 1C et 1D, pour une mousse selon l'invention de granulométrie comprise entre 300 µm et 2 mm ;
- la figure 5 représente la surface spécifique, exprimée en m²/g, d'une mousse d'oxyde d'hafnium selon l'invention en fonction de sa granulométrie par tranches ;
- la figure 6 représente l'évolution de la surface spécifique, théorique (losanges) et expérimentale (carrés), de l'oxyde d'hafnium en fonction de la taille des grains d'oxyde d'hafnium ; et
- la figure 7 représente la masse volumique apparente, exprimée en kg.m⁻³, en fonction de la granulométrie, par tranches, d'une mousse d'oxyde d'hafnium selon l'invention.

Une mousse céramique est synthétisée selon l'invention.

Le procédé de synthèse est valable pour synthétiser une mousse d'oxyde d'hafnium HfO₂ ou une mousse d'oxyde de tantale Ta₂O₅ à partir respectivement des chlorures d'hafnium ou de tantale.

Ces chlorures métalliques sont dissous dans un solvant, le dichlorométhane CH₂Cl₂, puis on additionne un éther, l'éther diéthylique (CH₃CH₂)₂O, afin de synthétiser un précurseur de mousse de la forme MCl_{x-y}(OCH₂CH₃)_{y}, où M est l'hafnium ou le tantale. Lors de la formation de ce précurseur, du chlorure d'éthyle se dégage.

Les rapports molaires utilisés sont tels que le rapport chlorure métallique sur éther fasse correspondre un atome d'oxygène à un atome de chlore. Ainsi, HfCl₄/O(CH₂CH₃)₂ = 1/4 et TaCl₅/O(CH₂CH₃)₂ = 1/5. Le rapport chlorure métallique sur solvant CH₂Cl₂ est au maximum de l'ordre de 1/5.

Une mousse d'oxyde d'hafnium ainsi obtenue est étudiée.

D'abord, elle est observée au microscope électronique à balayage, ou MEB, afin de caractériser plus précisément la microstructure de la mousse, et notamment la morphologie de la mousse à différentes échelles, la taille des pores, si les pores sont ouverts, fermés, ou interconnectés, et l'épaisseur des parois.

Ces observations au MEB sont faites pour différentes granulométries de mousse.

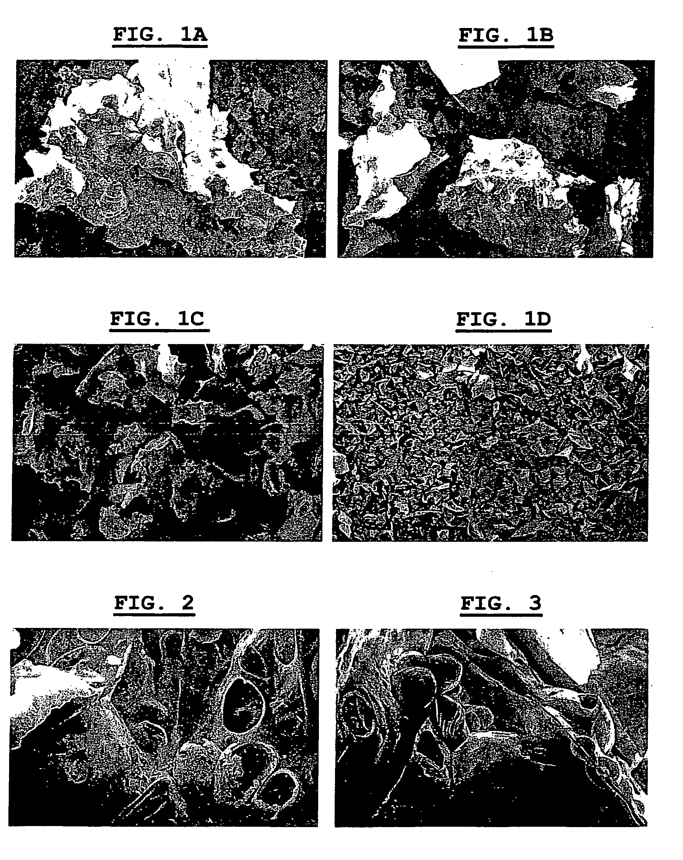

Ainsi, les figures 1A, 1B, 1C et 1D permettent de mettre en évidence une diminution de la porosité de la mousse quand la granulométrie de celle-ci diminue.

De plus, la taille des pores observés varie d'environ 10 µm à environ 500 µm.

Pour les granulométries inférieures à 300 µm (figure 1D), la porosité est presque entièrement détériorée. Pour renforcer les propriétés d'isolation thermique de matériaux, on utilisera donc plus préférentiellement de la mousse d'oxyde d'hafnium dont les grains sont de granulométrie supérieure à 300 µm.

Sur les micrographies MEB des figures 2 et 3, la microstructure de la mousse est encore observée. On remarque la présence de porosité sous forme de bulles au sein de la mousse.

L'observation des parois des pores met en évidence le fait qu'un broyage mécanique de la mousse, par exemple dans un mortier en agathe, est néfaste à l'intégrité de sa microstructure. En effet, la figure 2 montre des parois des pores arrachées.

D'après l'observation de la micrographie de la figure 3, la porosité semble être majoritairement ouverte et interconnectée. Il semble que la porosité ouverte soit due à l'éclatement des pores lors de la phase de moussage.

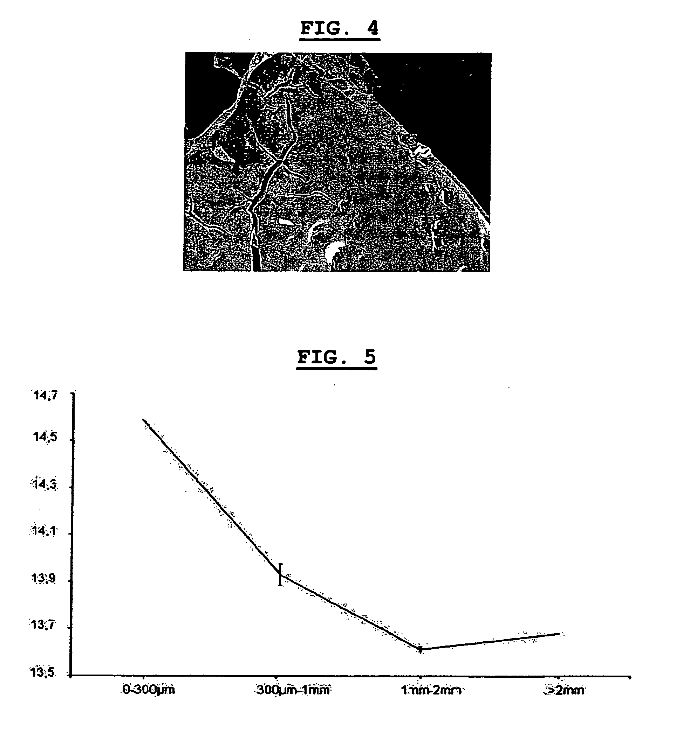

D'après la micrographie de la figure 4, l'épaisseur des parois des pores peut être estimée à environ 5 µm minimum et environ 20 µm maximum. On peut également noter la présence de microfissures dues soit à la phase de moussage soit au broyage.

La surface spécifique de la mousse est déterminée par le modèle de Brunauer, Emmett et Teller (BET). Par mesure de la surface spécifique de la mousse, on entend mesure de la surface développée par unité de masse, généralement exprimée en m²/g.

La courbe obtenue reliant la surface spécifique BET à la granulométrie de la mousse est représentée sur la figure 5.

On observe une légère augmentation de la surface spécifique quand la granulométrie diminue.

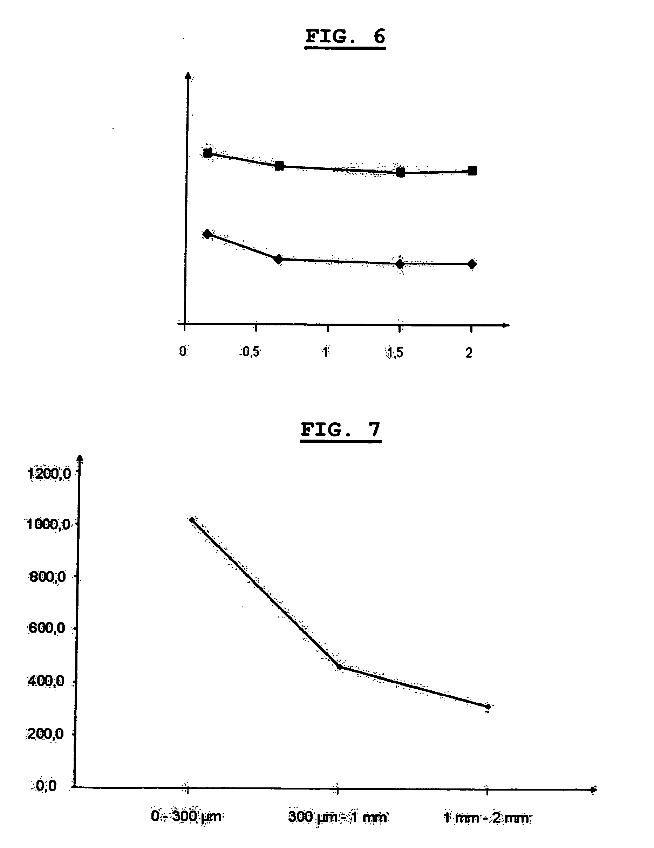

Si l'on simule la surface spécifique théorique de l'oxyde d'hafnium, c'est-à-dire pour des grains sphériques et denses à 100%, en fonction de la taille des grains d'oxyde, la courbe (reliant les losanges) obtenue à la figure 6, est similaire à la courbe (reliant les carrés) expérimentale de la figure 6 également.

Par conséquent, il peut être envisagé que, d'un point de vue structural, la porosité de la mousse est très majoritairement ouverte. En effet, la présence de porosité fermée aurait eu pour conséquence d'augmenter considérablement la surface spécifique quand là taille des grains diminue.

La courbe obtenue par la mesure de la masse volumique apparente est représentée sur la figure 7. Celle-ci met en évidence que, lorsque la granulométrie diminue, la masse volumique augmente. En effet, la taille des pores allant de 10 à 500 µm, lorsque l'on diminue la taille des grains de mousse, le nombre de pores diminue, et donc la quantité d'air emprisonné dans la mousse diminue, conduisant ainsi à une augmentation de la masse volumique apparente.

Afin de vérifier la stabilité thermique de la mousse d'oxyde d'hafnium, lorsqu'elle est exposée à de très hautes températures, deux types de mesures sont effectués.

Une mesure thermogravimétrique est couplée à une analyse thermique différentielle. On met ainsi en évidence la stabilité de la mousse d'oxyde d'hafnium jusqu'à 1600°C. En effet, aucune perte de masse ni aucun signal thermique de la mousse ne sont observés.

On sait que le premier changement de phase de l'oxyde d'hafnium, de la phase monoclinique à la phase tétragonale, s'opère à 1670°C. Ce changement de phase s'accompagne d'une variation dimensionnelle importante impliquant alors une fragilisation de l'oxyde. L'oxyde d'hafnium peut alors être stabilisé en dopant celui-ci avec de l'oxyde d'yttrium Y₂O₃, pour former une mousse selon l'invention. Du trichlorure d'yttrium est, dans ce cas, dissous avec le chlorure d'hafnium ou de tantale.

Le tableau suivant récapitule les propriétés des mousses d'oxyde d'hafnium synthétisées en laboratoire selon l'invention.

| Propriétés | Matériau | | | |
|---|---|---|---|---|
| | HfO₂ dense | Mousse (granulométrie) | | |
| | | HfO₂ (2mm-1mm) | HfO₂ (1mm-300µm) | HfO₂ (300µm-0) |
| Température de fusion (°C) | 2810 | | | |
| Conductivité thermique (W/m.K) | 1,67 | <1,67 | | |
| Paramètres cristallins ou paramètres de mailles | Système à phase monoclinique ; a=5,287 À ; b=5, 177 Å ; c=5,115 Å ; β=99, 23° | | | |
| Chaleur spécifique (J/kg.°C) | 272 | | | |
| Porosité | - | 4% de porosité fermée et 96% de porosité ouverte, la taille des pores varie de 10 à 500µm | | |
| Surface spécifique (m²/g) | - | 13,7 | 13,9 | 14,6 |
| Masse volumique apparente (kg/m³) | - | 350 | 400 | 1000 |

## Revendications

1. Mousse comprenant au moins 90% en poids d'un oxyde métallique consistant en l'oxyde d'hafnium constituée de pores de taille comprise entre 10 et 500 micromètres et présentant une masse volumique apparente comprise entre 320 et 500 kilogrammes par mètre cube.

2. Mousse selon la revendication 1, comprenant au moins 95% en poids de l'oxyde métallique.

3. Mousse selon la revendication 1 ou 2, constituée de 100% en poids de l'oxyde métallique.

4. Mousse selon la revendication 1 ou 2, comprenant de l'oxyde d'yttrium.

5. Mousse selon la revendication 3, dont la conductivité thermique est < 1,67W/m.K.

6. Mousse selon l'une quelconque des revendications 1 à 5, dans laquelle l'oxyde métallique est sous forme de grains de granulométrie comprise entre 300 micromètres et 2 millimètres.

7. Mousse selon l'une quelconque des revendications 1 à 6, de porosité majoritairement ouverte et interconnectée.

8. Mousse selon l'une quelconque des revendications 1 à 7, présentant une surface spécifique BET comprise entre 13 et 15 mètres carré par gramme.

9. Mousse selon l'une quelconque des revendications 1 à 8, dans laquelle l'épaisseur des parois des pores est estimée à 5 micromètres minimum et 20 micromètres maximum.

10. Procédé d'obtention d'une mousse d'oxyde d'hafnium HfO₂ ou d'oxyde de tantale Ta₂O₅, comprenant des étapes de :
a- synthèse d'un précurseur de mousse incluant une dissolution de chlorure d'hafnium ou de chlorure de tantale dans un solvant chloré tel que le dichlorométhane, puis une addition d'un éther symétrique tel que l'éther diéthylique pour former le précurseur de mousse de formule HfCl_{x-y}(OCH₂CH₃)_{y} ou TaCl_{x-y}(OCH₂CH₃)_{y},
b- précipitation du précurseur de mousse pour obtenir un précipité de formule Hf(CH₃CH₂O)₄ ou Ta(CH₃CH₂O)₅, de préférence à une température de l'ordre de 25°C,
c- séchage sous vide du précipité, de préférence à une température de l'ordre de 25°C,
d- moussage du précipité sec à une température supérieure à la température d'ébullition du solvant chloré, et de préférence à une température comprise entre 50 et 95°C, et indifféremment en volume ouvert ou fermé, pour obtenir une mousse organométallique, et
e- traitement thermique de la mousse organométallique à une température au moins égale à 500°C, et de préférence à une température comprise entre 500°C et 1000°C.

11. Procédé selon la revendication 10, dans lequel la dissolution qu'inclut l'étape (a) comprend en outre une dissolution de chlorure d'yttrium.

12. Mousse selon l'une des revendications 1 à 9, obtenue par le procédé selon l'une quelconque des revendications 10 ou 11.

13. Utilisation de la mousse telle que décrite dans l'une quelconque des revendications 1 à 8, comme isolant thermique.

## Claims

1. Foam comprising at least 90% by weight of a metal oxide consisting in the hafnium oxide constituted with pores of a size ranging from 10 to 500 micrometers and with a density ranging from 320 to 500 kilograms per cubic meter.

2. Foam according to claim 1, comprising at least 95% by weight of the metal oxide.

3. Foam according to claim 1 or 2, constituted of 100% by weight of the metal oxide.

4. Foam according to claim 1 or 2, comprising yttrium oxide.

5. Foam according to claim 3, which thermal conductivity is <1.67W/m.K.

6. Foam according to anyone of claims 1 to 5, in which the metal oxide is in the form of grains with a particle size distribution ranging from 300 micrometers to 2 millimetres.

7. Foam according to anyone of claims 1 to 6, of a mainly opened and interconnected porosity.

8. Foam according to anyone of claims 1 to 7, having a BET specific surface area ranging from 13 to 15 square meter per gram.

9. Foam according to anyone of claims 1 to 8, in which the wall thickness of the pores is estimated at a minimum of 5 micrometers and a maximum of 20 micrometers.

10. Process to obtain a hafnium oxide HfO₂ or tantalum oxide Ta₂O₅ foam, comprising steps of:
a- synthesis of a foam precursor including a dissolution of hafnium chloride or tantalum chloride in a chlorinated solvent such as dichloromethane, then an addition of a symmetrical ether such as diethyl ether in order to form the foam precursor of formula HfCl_{x-y}(OCH₂CH₃)_{y} or TaCl_{x-y}(OCH₂CH₃)_{y},
b- precipitation of the foam precursor in order to obtain a precipitate of formula Hf(CH₃CH₂O)₄ or Ta(CH₃CH₂O)₅, preferably at a temperature in the range of 25°C,
c- vacuum drying of the precipitate, preferably at a temperature in the range of 25°C,
d- foaming of the dry precipitate at a temperature above the ebullition temperature of the chlorinated solvent, and preferably at a temperature between 50 and 95°C, and either in open or closed volume, in order to obtain an organometallic foam, and
e- heat treatment of the organometallic foam at a temperature at least equal to 500°C, and preferably at a temperature between 500°C and 1000°C.

11. Process according to claim 10, in which the dissolution included in the (a) step further comprises a dissolution of yttrium chloride.

12. Foam according to anyone of claims 1 to 9, obtained from the process according to anyone of claims 10 or 11.

13. Using of the foam such as described in anyone of claims 1 to 8 as a heat insulator.

## Patentansprüche

1. Schaumstoff, der mindestens 90 Gewichtsprozente eines Metalloxids umfasst, das aus Hafniumoxid besteht, mit Poren, deren Größe zwischen 10 und 500 Mikrometern beträgt, und eine Rohdichte zwischen 320 und 500 Kilogramm pro Kubikmeter aufweist.

2. Schaumstoff nach Anspruch 1, der mindestens 95 Gewichtsprozente Metalloxid umfasst.

3. Schaumstoff nach Anspruch 1 oder 2, der aus 100 Gewichtsprozenten Metalloxid besteht.

4. Schaumstoff nach Anspruch 1 oder 2, der Yttriumoxid umfasst.

5. Schaumstoff nach Anspruch 3, dessen Wärmeleitfähigkeit < 1,67W/m.K ist.

6. Schaumstoff nach einem der Ansprüche 1 bis 5, in welchem das Metalloxid in Form von Körnern mit einer Korngröße zwischen 300 Mikrometern und 2 Millimetern vorliegt.

7. Schaumstoff nach einem der Ansprüche 1 bis 6 mit einer größtenteils offenen und vernetzten Porosität.

8. Schaumstoff nach einem der Ansprüche 1 bis 7, der eine spezifische BET-Oberfläche zwischen 13 und 15 Quadratmetern pro Gramm aufweist.

9. Schaumstoff nach einem der Ansprüche 1 bis 8, in welchem die Porenwandstärke auf mindestens 5 Mikrometer und höchstens 20 Mikrometer geschätzt wird.

10. Verfahren zum Erhalt eines Hafniumoxidschaumstoffes HfO₂ oder Tantaloxidschaumstoffes Ta₂O₅, das folgende Schritte umfasst :
a- Synthese eines Schaumstoffvorläufers, die die Auflösung von Hafniumchlorid oder Tantalchlorid in einem chlorhaltigen Lösungsmittel wie z.B. Dichlormethan, anschließend die Hinzufügung eines symmetrischen Ethers wie z.B. Diethylether beinhaltet, um den Schaumstoffvorläufer der Formel HfCl_{x-y}(OCH₂CH₃)_{y} oder TaCl_{x-y}(OCH₂CH₃)_{y} zu bilden,
b- Ausfällung des Schaumstoffvorläufers, um einen Niederschlag der Formel Hf(CH₃CH₂O)₄ oder Ta(CH₃CH₂O)₅ zu erhalten, vorzugsweise bei Temperaturen um 25°C,
c- Vakuumtrocknung des Niederschlags, vorzugsweise bei Temperaturen um 25°C,
d- Aufschäumen des trockenen Niederschlags bei Temperaturen oberhalb der Siedetemperatur des chlorhaltigen Lösungsmittels, und vorzugsweise bei einer Temperatur zwischen 50 und 95 °C, und in gleicher Weise in offenem oder geschlossenem Volumen, um einen metallorganischen Schaumstoff zu erhalten, und
e- Wärmebehandlung des metallorganischen Schaumstoffes bei einer Temperatur von mindestens 500°C, vorzugsweise bei einer Temperatur zwischen 500°C und 1000°C.

11. Verfahren nach Anspruch 10, in welchem das in Schritt (a) beinhaltete Auflösen außerdem eine Auflösung von Yttriumchlorid umfasst.

12. Schaumstoff nach einem der Ansprüche 1 bis 9, der nach dem Verfahren nach einem der Ansprüche 10 oder 11 erhalten wird.

13. Verwendung eines Schaumstoffes wie in den Patentansprüchen 1 bis 8 beschrieben als Wärmedämmstoff.
